# EUROPÄISCHE PATENTSCHRIFT

(11) **EP 3 084 363 B1**
(45) Veröffentlichungstag und Bekanntmachung des Hinweises auf die Patenterteilung: **10.03.2021**
(21) Anmeldenummer: 14798882.8
(22) Anmeldetag: 14.11.2014
(51) Int. Cl.: G01F 1/66

(54) **MESSANORDNUNG UND ULTRASCHALL-DURCHFLUSSMESSGERÄT**
MEASURING ASSEMBLY AND ULTRASOUND FLOW METER
DISPOSITIF DE MESURE ET DÉBITMÈTRE À ULTRASONS

(30) Priorität: 20.12.2013 DE 102013114744
(43) Veröffentlichungstag der Anmeldung: 26.10.2016
(73) Patentinhaber: Endress+Hauser Flowtec AG, 4153 Reinach (BL) (CH)
(72) Erfinder: UEBERSCHLAG, Pierre, F-68300 Saint-Louis (FR); OUDOIRE, Patrick, F-68360 Soultz (FR)
(74) Vertreter: Andres, Angelika Maria
(86) Internationale Anmeldenummer: PCT/EP2014/074657
(87) Internationale Veröffentlichungsnummer: WO 2015/090772

(56) Entgegenhaltungen:
- EP-A1- 0 477 419
- FR-A1- 2 645 901
- GB-A- 2 294 074
- US-B1- 7 870 793

## Beschreibung

Die vorliegende Erfindung betrifft eine Messanordnung und ein UltraschallDurchflussmessgerät.

Im Bereich der Ultraschall-Durchflussmessgeräte sind Clamp-On und In-Line Durchflussmessgeräte bekannt. Beide Technologien haben gewisse vor und Nachteile.

Darüber hinaus sind aus der DE 20 2011 050 287 U1 Sensorelemente bekannt, welche am Messrohr verschweißte Stangen und endständig Ultraschallwandler aufweisen. Diese Konstruktion ist dabei eindeutig den Inline-Messgeräten zuzuordnen. Bei Inline-Messgeräten ist stets ein zusätzliches Messrohr vorgesehen, welches in eine bestehende Rohrleitung eingesetzt wird. Üblicherweise muss hierfür der bestehenden Rohrleitung ein Rohrsegment entnommen werden. Durch Verflanschen des Messrohres mit den Rohrleitungsenden wird das Inline-Messgerät sodann in die Rohrleitung eingesetzt.

Ähnlich wie aus der DE 20 2011 050 287 U1 bekannt, offenbart die EP0477419A1 Ultraschallwandler, welche endständig an einer Haltekonstruktion festgemacht sind, wobei sich ein Abstand der Ultraschallwandler zueinander durch teleskopartige Bewegung der Haltekonstruktion verändern lässt.

Bei Inline-Durchflussmessgeräten gilt es u.a. die Verbindungsbereiche zur Rohrleitung entsprechend abzudichten. Zudem ist der Material- und Arbeitsaufwand bei der Installation des Gerätes in eine Rohrleitung vergleichsweise hoch.

Ausgehend von den bisher bekannten beiden bisher bekannten und verbreiteten Varianten von Ultraschall-Durchflussmessgeräten ist es Aufgabe der vorliegenden Erfindung eine Messanordnung bereitzustellen, bei welcher ein Ultraschalldurchflussmessgerät an ein Rohr einer bestehenden Rohrleitung integriert werden kann.

Erfindungsgemäß umfasst eine Messanordnung ein Rohr mit einer Rohrachse und ein Ultraschall-Durchflussmessgerät, wobei das Ultraschall-Durchflussmessgerät eine Sensoreinheit aufweist, welche in einem Loch im Rohr festgelegt ist, welches Loch im Wesentlichen senkrecht zur Rohrachse in der Rohrwandung eingebracht ist, wobei die Sensoreinheit eine Schiene mit einer Längsachse aufweist, wobei die Schiene zumindest zwei Ultraschallwandler, welche einen Signalpfad definieren, wobei der Signalpfad parallel zur oder auf der Längsachse der Schiene verläuft und wobei der

Signalpfad gegenüber einer senkrechten Verbindungslinie zwischen dem Lochmittelpunkt und der Rohrachse angewinkelt ist Erfindungsgemäß ist die Schiene oder der Stab durch ein Gestänge im Rohr durch Rotation ausrichtbar.

Die vorliegende Erfindung stellt einen Kompromiss zwischen einem Clamp-On Messgerät und einem In-Line Messgerät dar. Es lässt sich einerseits in ein bestehendes Rohr eines Rohrsystem adaptieren, andererseits muss ein Eingriff in die Rohrwandung zur Installation und Festlegung des Sensorelements des Messgerätes in dem Rohr erfolgen.

Vorteilhafte Ausgestaltungen und Varianten der Erfindung sind Gegenstand der Unteransprüche.

Bei der Ausrichtung des Signalpfades ist grundsätzlich auch eine Ausrichtung der Ultraschallwandler möglich. Da aber eine Feinjustierung im Rohr aufgrund der schweren Zugänglichkeit oft sehr schwierig ist, können die Ultraschallwandler vorteilhaft fest mit der Schiene verbunden sind und die Schiene gegenüber der Verbindungsachse verkippt sein.

Es ist von Vorteil, wenn die Sensoreinheit einen Korpus aufweist, welcher fest mit dem Rohr verbunden ist, wobei der Korpus außerhalb des Rohres angeordnet ist und wobei sich vom Korpus die Schiene in den Innenbereich des Rohres erstreckt. Somit dient der Korpus als Anschlag und begrenzt die Einschubbewegung. Freilich sollte der Korpus hierfür eine größere Dimensionierung wie das Loch im Rohr oder zumindest hervorstehende Anschlagelemente aufweisen, während die Schiene und die Ultraschallwandler geringer dimensioniert sein sollten als das Loch im Rohr.

Die Schiene kann für eine flexible Ausrichtung unter verschiedenen Anstellwinkeln im Messrohr über ein Gelenk mit dem Korpus verbunden sein. Für einen höheren Freiheitsgrad kann das Gelenk insbesondere vorteilhaft als ein Kugelgelenk ausgebildet sein.

Die Schiene ist durch ein Gestänge im Rohr ausrichtbar. Das Gestänge ist dabei manuell von außen, also außerhalb des Rohres, bedienbar. Das Gestänge besteht insbesondere aus zwei stabförmigen Elementen und zwei Scharnieren. So wird eine translatorische Bewegung bei Betätigen des Gestänges in eine Verschwenkbewegung zum Ausrichten der Schiene vorteilhaft umgewandelt.

Alternativ oder zusätzlich kann das Rohr einen Stutzen mit einem winkligen Teilsegment aufweist, welcher in das Loch eingesetzt ist und welches winklige Teilsegment eine Mittelachse aufweist, welche auf oder parallel zur Längsachse der Schiene verläuft. Bei dieser Ausführung kann die Schiene starr mit dem Korpus verbunden sein, da der Stutzen die Schiene führt. Bei größeren Stutzen kann die große Ausrichtung erfolgen und mittels des Gestänges oder eines Gewindekranzes nachjustiert werden.

Zur angewinkelten Anordnung des Signalpfades im Rohr kann altervativ oder zusätzlich ein Gewindering vorgesehen sein. Durch eine Verdrehbewegung des Gewinderings können Winkel eingestellt werden, hierzu kann z.B. eine Tellerfeder genutzt werden, die sich einseitig in einem Teilbereich des Lochumfangs abstützt.

Erfindungsgemäß weist ein Ultraschall-Durchflussmessgerät eine Sensoreinheit auf, wobei die Sensoreinheit eine Schiene mit einer Längsachse aufweist wobei die Schiene zumindest zwei Ultraschallwandler, welche einen Signalpfad definieren,
wobei der Signalpfad parallel zur oder auf der Längsachse der Schiene verläuft, und wobei das Ultraschallmessgerät Mittel aufweist zum Ausrichten der Ultraschallwandler innerhalb des Messrohres.

Bei der erfindungsgemäßen Variante des Ultraschalldurchflussmessgerätes wird eine Ausrichtung bereits durch das Messgerät selbst ermöglicht. Zusätzliche Stutzen oder Gewinderinge werden nicht zwingend benötigt. Das Gerät kann daher werksseitig vorjustiert und einbaufertig an den Endkunden geliefert werden.

Die besagten Mittel können insbesondere als ein Gestänge ausgebildet sein.

Nachfolgend soll die Erfindung anhand eines Ausführungsbeispiels und unter Zuhilfenahme mehrerer Figuren näher erläutert werden. Es zeigen:
- Fig. 1:: Perspektivansicht eines Teils einer erfindungsgemäßen Messanordnung aus einem Ultraschalldurchflussmessgerät und einem Rohr;
- Fig. 2:: Schnittansicht eines Teils der Messanordnung;
- Fig. 3: Perspektivansicht der Messanordnung,
- Fig. 4: Perspektivansicht einer Sensoreinheit des Ultraschallmessgeräts, und
- Fig. 5: Ansicht der Ausrichtung der Sensoreinheit im Rohr.

Ultraschall-Durchflussmessgeräte werden vielfach in der Prozess- und Automatisierungstechnik eingesetzt. Sie erlauben in einfacher Weise, den Volumendurchfluss und/oder Massendurchfluss in einer Rohrleitung zu bestimmen. Die bekannten Ultraschall-Durchflussmessgeräte arbeiten häufig nach dem Laufzeitdifferenz Prinzip. Beim Laufzeitdifferenz-Prinzip werden die unterschiedlichen Laufzeiten von Ultraschallwellen, insbesondere Ultraschallimpulsen, so genannten Bursts, relativ zur Strömungsrichtung der Flüssigkeit ausgewertet. Hierzu werden Ultraschallimpulse in einem bestimmten Winkel zur Rohrachse sowohl mit als auch entgegen der Strömung gesendet. Aus der Laufzeitdifferenz lässt sich die Fliessgeschwindigkeit und damit bei bekanntem Durchmesser des Rohrleitungsabschnitts der Volumendurchfluss bestimmen.
Die Ultraschallwellen werden mit Hilfe so genannter Ultraschallwandler erzeugt bzw. empfangen. Hierfür sind Ultraschallwandler in der Rohrwandung des betreffenden Rohrleitungsabschnitts fest angebracht. Es sind auch Clamp-on-Ultraschall-Durchflussmesssysteme erhältlich. Bei diesen Systemen werden die Ultraschallwandler von ausserhalb des Messrohrs an dessen Rohrwand gepresst. Ein grosser Vorteil von Clamp-On-Ultraschall-Durchflussmesssystemen ist, dass sie das Messmedium nicht berühren und auf eine bereits bestehende Rohrleitung angebracht werden.
Die Ultraschallwandler bestehen normalerweise aus einem elektromechanischen Wandlerelement, z.B. ein piezoelektrisches Element, und einer Koppelschicht. Bei Clamp-On-Systemen werden im elektromechanischen Wandlerelement die Ultraschallwellen als akustische Signale erzeugt und über die Koppelschicht zur Rohrwandung geführt und von dort in die Flüssigkeit geleitet. Bei Inline-Systemen werden die akustischen Signale über die Koppelschicht in das Messmedium eingekoppelt. Dann wird die Koppelschicht auch seltener Membran genannt. Zwischen dem piezoelektrischen Element und der Koppelschicht kann eine weitere Koppelschicht angeordnet sein, eine so genannte Anpassungsschicht. Die Anpassungsschicht übernimmt dabei die Funktion der Transmission des Ultraschallsignals und gleichzeitig die Reduktion einer durch unterschiedliche akustische Impedanzen verursachte Reflexion an Grenzschichten zwischen zwei Materialen.
Sowohl bei Clamp-On-Systemen, als auch bei Inline-Systemen sind die Ultraschallwandler in einer gemeinsamen Ebene am Messrohr angeordnet, entweder auf gegenüberliegenden Seiten des Messrohrs, dann verläuft das akustische Signal, projiziert auf einen Rohrquerschnitt, einmal entlang einer Sekante durch das Messrohr, oder auf derselben Seite des Messrohrs, dann wird das akustische Signal an der gegenüberliegenden Seite des Messrohrs reflektiert, wodurch das akustische Signal zweimal das Messrohr entlang der auf den Querschnitt durch das Messrohr projizierten Sekante durchquert.

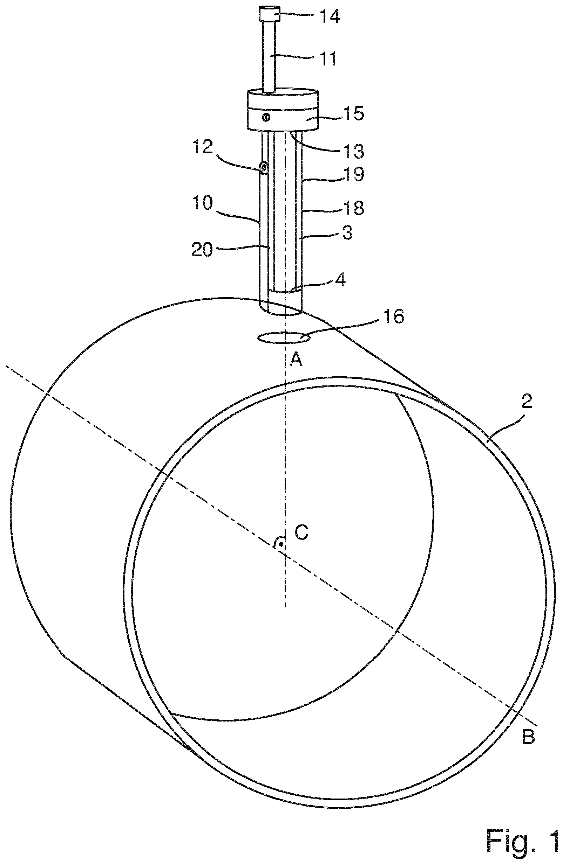

Ein bevorzugtes erstes Ausführungsbeispiel wird anhand der Fig. 1-4 erläutert.

In Fig. 1 erkennt man ein Rohr 2 mit einer Rohrachse B, in welches eine Sensoreinheit 3 eines Messgerätes 1 eingeführt wird. Die Sensoreinheit besteht aus einer länglichen Schiene 18, welche eine Längsachse A aufweist. Die Schiene 18 weist zwei Schienensegmente 19 und 20 auf, die parallel zur Längsachse A verlaufen. Zwischen den Schienensegmenten 19 und 20 ist ein Freiraum 21 angeordnet, welcher sich ebenfalls entlang der Längsachse erstreckt. Dieser die Schiene weist senkrecht zur Längsachse A längliche Öffnungen auf, durch welche ein im Rohr fließendes Messmedium in den Freiraum 21 eindringen kann.

Die Schiene muss nicht zwingend zwei Schienensegmente aufweisen, sondern kann auch auf ein Schienensegment reduziert werden. Entsprechend ist der Begriff Schiene im Rahmen der vorliegenden Erfindung auszulegen und zu verstehen. Es geht letztlich nur darum eine stabförmige Fixierungsmöglichkeit für zwei Ultraschallwandler bereitzustellen.

Der Freiraum 21 wird endständig durch zwei Ultraschallwandler 4 und 13 begrenzt, welche derart angeordnet sind, dass sie ein Ultraschallsignal entlang eines Signalpfades aussenden können, welches im Wesentlichen auf der Längsachse oder parallel zur Längsachse A der Schiene verläuft. Die Ultraschallwandler 4 und 13 sind dabei starr mit der Schiene 18 verbunden. Daher wird bei einem Ausrichten der Schiene der Abstand und der Winkel beider Ultraschallwandler zueinander konstant gehalten.

Das Rohr 2 weist ein Loch 16 auf. Das Loch 16 weist eine Lochmitte auf und eine durch die Lochmitte verlaufende Längsachse C. Diese Längsachse C, welche durch den Verlauf des Loches 16 definiert wird, steht senkrecht zur Rohrachse. In vereinfachter Weise gesprochen, handelt es sich bei dem Loch um eine Senkrechtbohrung im Rohr. Derartige Bohrungen sind gegenüber Schrägbohrungen leicht in ein Rohr einzubringen, da der Bohrwinkel sehr gut eingehalten werden kann.

Die Sensoreinheit 3 des Messgerätes weist zudem einen Korpus 15 auf, welcher an einem Ende der Schiene 3 angeordnet ist. Dieser Korpus 18 ist in einer Ebene, die parallel zur Rohrachse B verläuft, breiter dimensioniert als die Schiene 18.

Parallel zur Schiene 18 ist in Fig. 1 ein Gestänge 5 mit zwei stabförmigen Elementen 10, 11 angeordnet, welche mittels eines Scharniers 12 miteinander verbunden sind. Das Scharnier kann in seiner einfachsten Ausführung als Verbindungsschraube ausgebildet sein, wie dies in Fig. 1. gezeigt ist. Insbesondere ist das Scharnier 12 als ein sogenanntes Kippscharnier ausgebildet. Ein erstes der beiden stabförmigen Elemente 11 ist zudem in einem Loch im Korpus 15 angeordnet und wird innerhalb dieses Loches geführt. Während ausgehend von einer Unterseite des Korpus 15 die Schiene 18 verläuft, steht somit aus der der Unterseite gegenüberliegenden Oberseite des Korpus ein Teilsegment des ersten der beiden stabförmigen Elemente 11 hervor. An diesem Teilsegment ist ein Anschlagselement 14 angeordnet.

Innerhalb des Korpus 15 ist ein zweites Gelenk 17 angeordnet. Durch dieses Gelenk 17 kann die Schiene 18 gegenüber dem Korpus 15 gekippt werden. Das Gelenk 17 kann beispielsweise als Kugelgelenk ausgebildet sein.

Das zweite der beiden stangenförmigen Elemente 10 ist an einem Ende über ein zweites Gelenk 9 mit der Schiene 18, insbesondere mit dem Ende der Schiene 18 verbunden.

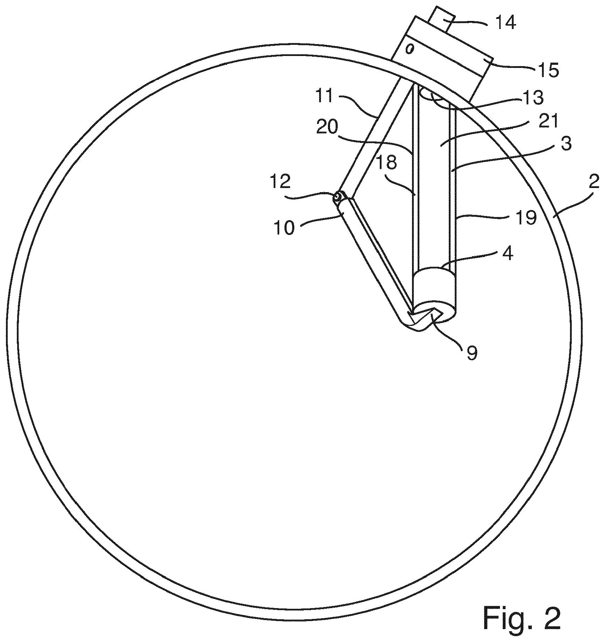

Fig. 1 & Fig. 2 zeigt die Installation und Ausrichtung des Sensorelements 3 im Rohr 2. In Fig. 1 wird das Sensorelement 3 mit der Schiene 18 voran durch das Loch 16 geschoben. Die Einschubbewegung stoppt, sofern die Schiene 18 vollständig oder nahezu vollständig in das Rohr 2 hineinragt. In dieser Position liegt der Korpus 15 von außen auf dem Rohr 2 auf. Selbstverständlich können noch Dichtelemente zwischen der Rohrwandung und dem Korpus 15 angeordnet sein. Die Einschubbewegung erfolgt dabei in einer Richtung senkrecht zur Rohrachse B. Zur Fixierung kann das Loch ein Gewinde aufweisen, in welches ein Gegengewinde der Sensoreinheit, insbesondere des Korpus 15, eingreift.

Bei senkrechter Ausrichtung würde die Sensoreinheit jedoch verständlicherweise nur schwer eine Durchflussmessung nach dem Laufzeitdifferenzprinzip durchführen können. Üblicherweise bedarf es hierfür eines Ausrichtens des Signalpfades, so dass der Verlauf eines ausgesandten Ultraschallsignals zumindest teilweise in oder entgegen der Strömungsrichtung erfolgt.

Dieses Ausrichten ist in Fig. 2 näher dargestellt. Da die Ultraschallwandler 4 und 13 fest mit der Schiene verbunden sind, reicht es aus, die Schiene gegenüber dem Korpus 15 zu verkippen. Dieser ist starr mit der Rohrwandung des Rohres 2 verbunden. Das Gestänge 5 dient dabei dem Ausrichten. Durch translatorische Bewegung des ersten stangenförmigen Elements 11 auf die Rohrachse B zu, erfolgt ein Einknicken des Scharnieres 12. Dabei ist die Bewegung des ersten stangenförmigen Element 11 durch das Loch im Korpus 15 geführt. Durch Einknicken des Scharnieres 12 erfolgt ein Umlenken der Bewegung des ersten stangenförmigen Elements 11 auf das zweite stangenförmige Element 10. Dieses wiederum bewirkt ein Abknicken des Scharniers 9. In Folge dessen wird die Schiene 18 im Rohr 2 angekippt und dadurch ausgerichtet. Der Umfang der translatorischen Bewegung des ersten stabförmigen Elements bestimmt den Kippwinkel der Schiene 18 und somit den Kippwinkel des Schallpfades der beiden Ultraschallwandler. Das Anschlagselement 14 kann lösbar am ersten stabförmigen Element 11 angeordnet sein und z.B. über eine Madenschraube fixiert werden. Es begrenzt die translatorische Bewegung des stabförmigen Elements 11 und somit den Ankippwinkel des Schallpfades.

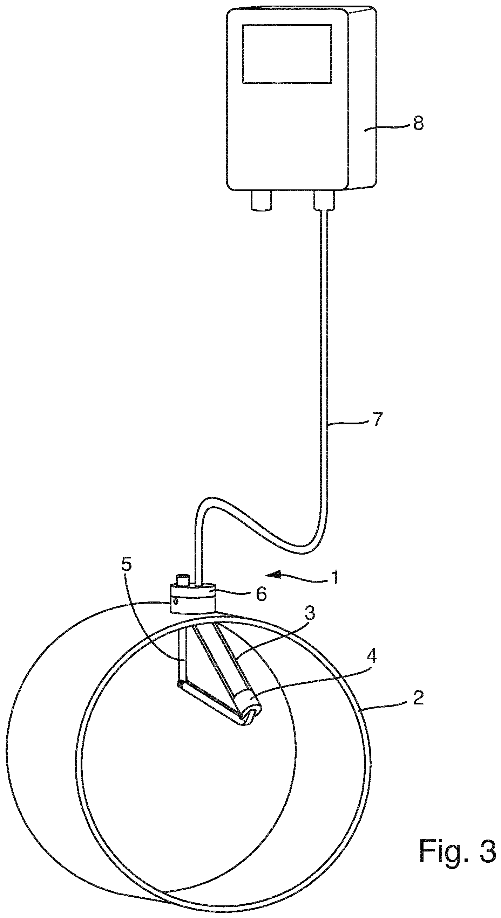

In Fig. 3 ist ein Ultraschall-Durchflussmessgerät 1 mit der Sensoreinheit 3 gezeigt. Zusätzlich zur Messeinheit wird das Ultraschall-Durchflussmessgerät 1 durch eine Anzeige- und Auswerteeinheit 8 komplettiert. Eine Leitung 7 verbindet beide Einheiten miteinander und ermöglicht den Datenaustausch und ggf. auch die Energieversorgung der Sensoreinheit. Der Datenaustausch kann auch drahtlos erfolgen. Die Energieversorgung der Sensoreinheit kann getrennt von der Anzeige- und Auswerteeinheit 8 erfolgen.

Die Anzeige- und Auswerteeinheit 8 kann auch die Ultraschallwandler vollständig steuern.

Die Gesamtheit aus Rohr 2 und Ultraschall-Durchflussmessgerät 1 ist im Rahmen der Erfindung als Messanordnung zu verstehen.

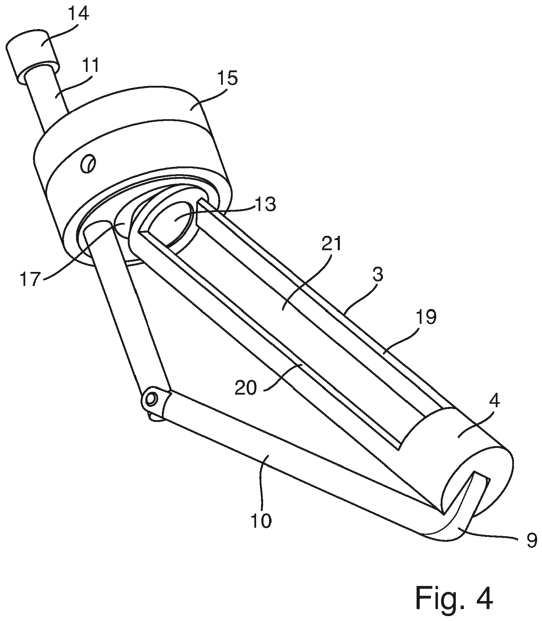

Fig. 4 ist eine nochmalige Detaildarstellung der Sensoreinheit der Fig. 1-3.

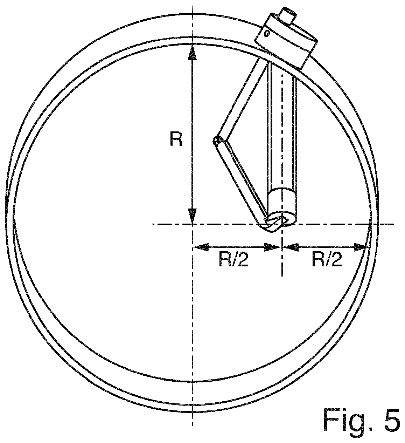

Je nach Rotationsausrichtung des Korpus über die Achse C, setzt man die Kippebene der Sensoreinheit 3 fest. Wenn diese Ebene die Rohrachse B enthält, dann wird die Signalpfadachse A1, welche in Fig. 1-5 der Längsachse A der Schiene entspricht, die Rohrachse B verfolgen. Beim Kippen der Sensoreinheit wird ein Messwinkel erzeugt und eine Messpfadachse definiert, die sich durch die Rohrachse B verläuft bzw. mit dieser kreuzt. Mit dieser Anordnung wird ein ein Messfehler zwischen laminarem Durchflussprofil und turbulentem Durchflussprofil erzeugt.
Sollte der Korpus rotiert werden, dann wird die Kippebene auf einem Winkel zur Rohrachse definiert bzw. erzeugt. Durch diese Ausrichtung wird beim Kippen der Sensoreinheit ein Messwinkel erzeugt und der Messpfad wird aus der Rohrachse versetzt. Eine besonders optimale Ausrichtung ergibt sich sofern die Achse A der Schiene 18 eine Sekante ist, die parallel zu einem Rohrradis R verläuft und im Wesentlichen um die Distanz eines halben Radius r/2 von diesem beabstandet ist. Dieser Anordnung ermöglicht die Minimierung des vorgenannten Messfehlers zwischen laminaren und turbulenten Profilen.

In einer nicht näher dargestellten Ausführungsvariante sind die Ultraschallwandler lösbar an der Schiene montiert und insbesondere entlang der Längsachse A der Schiene verschiebbar. Dadurch kann der Abstand der Ultraschallwandler zueinander variiert werden. Dies kann beispielsweise durch eine Schraubverbindung erfolgen.

Die Ausrichtung der Schiene 18 über das Gestänge 5 ist nur Möglichkeit der Ausrichtung. In einer nicht-dargestellten Ausführungsvariante kann die Schiene 18 mit dem Korpus 15 über einen Gewindering verbunden sein. Die Ausrichtung kann dabei dadurch erreicht werden, dass über den Gewindering ein Anstellwinkel der Schiene einstellbar ist. Hierfür kann der Gewindering z.B. ein Schneckengewinde aufweisen.

Alternativ kann die Ausrichtung auch mittels eines Einschraubstutzens mit einem winkligen Stutzensegment erreicht werden. Der Anstellwinkel des Stutzensegments gibt den Anstellwinkel der Schiene vor.

## Patentansprüche

1. Messanordnung umfassend ein Rohr (2) mit einer Rohrachse (B) und ein Ultraschall-Durchflussmessgerät (1),
wobei das Ultraschall-Durchflussmessgerät (1) eine Sensoreinheit (3) aufweist, welche in einem Loch (16) im Rohr (2) festgelegt ist, welches Loch (16) im Wesentlichen senkrecht zur Rohrachse (B) in der Rohrwandung eingebracht ist,
wobei die Sensoreinheit eine Schiene (18) oder einen Stab mit einer Längsachse (A) aufweist
wobei die Schiene oder der Stab zumindest zwei Ultraschallwandler (4 und 13), welche einen Signalpfad definieren,
wobei der Signalpfad parallel zur oder auf der Längsachse (A) der Schiene (18) oder des Stabes verläuft
und wobei der Signalpfad gegenüber einer senkrechten Verbindungslinie (C) zwischen dem Lochmittelpunkt und der Rohrachse (B) angewinkelt ist,
**dadurch gekennzeichnet, dass** die Schiene (18) oder der Stab durch ein Gestänge (5) im Rohr (2) durch Rotation ausrichtbar ist.

2. Messanordung nach Anspruch 1, **dadurch gekennzeichnet, dass** die Ultraschallwandler (4 und 13) fest mit der Schiene (18) oder dem Stab verbunden sind und die Schiene (18) oder der Stab gegenüber der Verbindungsachse (C) verkippt ist.

3. Messanordnung nach Anspruch 1 oder 2, **dadurch gekennzeichnet, dass** die Sensoreinheit (3) einen Korpus (15) aufweist, welcher fest mit dem Rohr (2) verbunden ist, wobei der Korpus (15) außerhalb des Rohres (2) angeordnet ist und wobei sich vom Korpus (15) die Schiene (18) oder der Stab in den Innenbereich des Rohres erstreckt.

4. Messanordnung nach Anspruch 3, **dadurch gekennzeichnet, dass** die Schiene (18) oder der Stab über ein Gelenk (17) mit dem Korpus (18) verbunden ist.

5. Messanordnung nach Anspruch 4, **dadurch gekennzeichnet, dass** das Gelenk (17) ein Kugelgelenk ist.

6. Messanordnung nach einem der vorhergehenden Ansprüche, **dadurch gekennzeichnet, dass** das Gestänge (5) aus zwei stabförmigen Elementen (10 und 11) und zwei Scharnieren (9 und 12) besteht.

7. Messanordnung nach einem der vorhergehenden Ansprüche, **dadurch gekennzeichnet, dass** das Rohr (2) einen Stutzen mit einem winkligen Teilsegment aufweist, welcher in das Loch (16) eingesetzt ist und welches winklige Teilsegment eine Mittelachse aufweist, welche auf oder parallel zur Längsachse (A) der Schiene (18) oder des Stabes verläuft.

8. Messanordnung nach einem der vorhergehenden Ansprüche, **dadurch gekennzeichnet, dass** zur angewinkelten Anordnung des Signalpfades im Rohr (2) ein Gewindering vorgesehen ist.

9. Messanordnung nach einem der vorhergehenden Ansprüche, **dadurch gekennzeichnet, dass** die Sensoreinheit (3) als Einschubteil ausgebildet ist, welches bis zum Korpus (15) in das Rohr (2) einschiebbar ist und insbesondere lösbar am Rohr (2) festgelegt ist.

10. Messanordnung nach einem der vorhergehenden Ansprüche, **dadurch gekennzeichnet, dass** durch das Kippen der Sensoreinheit (3), die Achse des Messpfads (A1) aus der Rohrachse (B) versetzt wird.

11. Messanordnung nach einem der vorhergehenden Ansprüche, **dadurch gekennzeichnet, dass** die Achse (A) der Schiene (18) oder Stab eine Sekante des Rohrquerschnitts bildet, die parallel zu einem Rohrradius R verläuft und im Wesentlichen um die Distanz eines halben Radius r/2 von diesem beabstandet ist.

## Claims

1. Measuring arrangement comprising a pipe (2) with a pipe axis (B) and an ultrasonic flowmeter (1),
wherein the ultrasonic flowmeter (1) has a sensor unit (3), which is secured in a hole (16) in the pipe (2), said hole (16) being implemented in the pipe wall essentially perpendicular to the pipe axis (B),
wherein the sensor unit has a rail (18) or a rod with a longitudinal axis (A), wherein the rail or the rod have at least two ultrasonic converters (4 and 13) which define a signal path,
wherein the signal path runs parallel to or on the longitudinal axis (A) of the rail (18) or the rod
and wherein the signal path is angled in relation to a vertical connecting line (C) between the center of the hole and the pipe axis (B),
**characterized in that** the rail (18) or the rod can be aligned by rotation by means of a bar (5) in the pipe (2).

2. Measuring arrangement as claimed in Claim 1, **characterized in that** the ultrasonic converters (4 and 13) are connected in a fixed manner to the rail (18) or rod, and **in that** the rail (18) or the rod is tilted in relation to the connecting axis (C).

3. Measuring arrangement as claimed in Claim 1 or 2, **characterized in that** the sensor unit (3) comprises a body (15), which is connected in a fixed manner to the pipe (2), wherein said body (15) is arranged outside the pipe (2) and the rail (18) or the rod extends from the body (15) into the interior of the pipe.

4. Measuring arrangement as claimed in Claim 3, **characterized in that** the rail (18) or the rod is connected to the body (18) by means of a joint (17).

5. Measuring arrangement as claimed in Claim 4, **characterized in that** the joint (17) is a ball joint.

6. Measuring arrangement as claimed in one of the previous claims, **characterized in that** the bar (5) is made from two rod-shaped elements (10 and 11) and two hinges (9 and 12).

7. Measuring arrangement as claimed in one of the previous claims, **characterized in that** the pipe (2) has a nozzle with an angled segment, which is inserted into the hole (16) and has a center axis which extends on or parallel to the longitudinal axis (A) of the rail (18) or the rod.

8. Measuring arrangement as claimed in one of the previous claims, **characterized in that** a threaded ring is provided for the angled arrangement of the signal path in the pipe (2).

9. Measuring arrangement as claimed in one of the previous claims, **characterized in that** the sensor unit (3) is designed as an insertion part which can be inserted into the pipe (2) as far as the body (15) and in particular is secured on the pipe (2) in a detachable manner.

10. Measuring arrangement as claimed in one of the previous claims, **characterized in that** the axis of the measuring path (A1) is moved out of the pipe axis (B) as a result of the tilting of the sensor unit (3).

11. Measuring arrangement as claimed in one of the previous claims, **characterized in that** the axis (A) of the rail (18) or the rod forms a secant of the pipe cross-section which runs parallel to a pipe radius R and is essentially at a distance of half a radius r/2 from said pipe radius.

## Revendications

1. Arrangement de mesure comprenant un tube (2) avec un axe de tube (B) et un débitmètre à ultrasons (1),
le débitmètre à ultrasons (1) comportant une unité de capteur (3), laquelle unité est fixée dans un trou (16) du tube (2), lequel trou (16) est réalisé dans la paroi de tube pour l'essentiel perpendiculairement à l'axe de tube (B),
l'unité de capteur comportant un rail (18) ou une tige avec un axe longitudinal (A), au moins deux convertisseurs à ultrasons (4 et 13) étant disposés sur le rail ou la tige, lesquels convertisseurs définissent un chemin de signal,
le chemin de signal s'étendant parallèlement à ou sur l'axe longitudinal (A) du rail (18) ou de la tige
et le chemin de signal étant coudé par rapport à une ligne de liaison (C) perpendiculaire entre le centre du trou et l'axe de tube (B),
**caractérisé en ce que** le rail (18) ou la tige peut être aligné(e) par rotation au moyen d'une tringle (5) à l'intérieur du tube (2).

2. Arrangement de mesure selon la revendication 1, **caractérisé en ce que** les convertisseurs à ultrasons (4 et 13) sont reliés de façon fixe avec le rail (18) ou la tige, et **en ce que** le rail (18) ou la tige est incliné(e) par rapport à l'axe de liaison (C).

3. Arrangement de mesure selon la revendication 1 ou 2, **caractérisé en ce que** l'unité de capteur (3) comporte un corps (15), lequel est relié de façon fixe avec le tube (2), le corps (15) étant disposé en dehors du tube (2) et le rail (18) ou la tige s'étendant à partir du corps (15) dans la zone intérieure du tube.

4. Arrangement de mesure selon la revendication 3, **caractérisé en ce que** le rail (18) ou la tige est relié(e) avec le corps (18) par l'intermédiaire d'une articulation (17).

5. Arrangement de mesure selon la revendication 4, **caractérisé en ce que** l'articulation (17) est une articulation à rotule.

6. Arrangement de mesure selon l'une des revendications précédentes, **caractérisé en ce que** la tringle (5) est constituée de deux éléments (10 et 11) en forme de tige et de deux charnières (9 et 12).

7. Arrangement de mesure selon l'une des revendications précédentes, **caractérisé en ce que** le tube (2) comporte une pièce de raccordement avec un segment partiel angulaire, lequel segment est inséré dans le trou (16) et lequel segment partiel angulaire présente un axe médian, qui s'étend sur ou parallèlement à l'axe longitudinal (A) du rail (18) ou de la tige.

8. Arrangement de mesure selon l'une des revendications précédentes, **caractérisé en ce qu'**est prévue une bague filetée pour la disposition coudée du chemin de signal à l'intérieur du tube (2).

9. Arrangement de mesure selon l'une des revendications précédentes, **caractérisé en ce que** l'unité de capteur (3) est formée en tant que partie escamotable, laquelle peut être insérée jusque vers le corps (15) à l'intérieur du tube (2) et est notamment fixée de façon amovible sur le tube (2).

10. Arrangement de mesure selon l'une des revendications précédentes, **caractérisé en ce que**, par le basculement de l'unité de capteur (3), l'axe du chemin de mesure (A1) est décalé de l'axe de tube (B).

11. Arrangement de mesure selon l'une des revendications précédentes, **caractérisé en ce que** l'axe (A) du rail (18) ou de la tige forme une sécante de la section du tube, laquelle sécante est parallèle à un rayon de tube R et se trouve pour l'essentiel à une distance d'un demi rayon r/2 de celui-ci.
